# EUROPEAN PATENT APPLICATION

(11) **EP 3 822 466 A1**
(43) Date of publication of application: **19.05.2021**
(21) Application number: 20204349.3
(22) Date of filing: 28.10.2020
(51) Int. Cl.: F01N 13/18, F16L 33/22

(54) **EXHAUST PIPE STRUCTURE, VEHICLE AND METHOD OF MANUFACTURING THE VEHICLE**

(30) Priority: 15.11.2019 JP 2019206859
(71) Applicant: MAZDA MOTOR CORPORATION, Hiroshima 730-8670 (JP)
(72) Inventor: HIRAOKA, Tetsuo, Fuchu-cho, Aki-gun,, Hiroshima 730-8670 (JP)
(74) Representative: Müller-Boré & Partner Patentanwälte PartG mbB

(57) **Abstract**

An exhaust pipe structure of an internal combustion engine vehicle is provided, which includes a coupling part coupling a first exhaust pipe to a second exhaust pipe disposed serially. The coupling part includes an insertion pipe part formed in the second exhaust pipe, an outer circumferential pipe part formed in the first exhaust pipe and to which the insertion pipe part is inserted, an inner circumferential pipe inserted into the outer circumferential pipe part, an annular protrusion formed in the second exhaust pipe and protruding radially outward from the entire circumference of the insertion pipe part, and a clamp member coupling the outer circumferential pipe part to the annular protrusion. The clamp member has a band part wrapped radially outside around a part where a flare part of the outer circumferential pipe part overlaps with the annular protrusion, and a tightening part tightening the band part.

## Description

### TECHNICAL FIELD

The present disclosure relates to an exhaust pipe structure for a vehicle with an internal combustion engine. The present disclosure also relates to a vehicle and a method of manufacturing a vehicle.

### BACKGROUND OF THE DISCLOSURE

Conventional vehicles provided with an internal combustion engine, such as automobiles, have a structure in which exhaust gas from the engine is discharged outside the vehicle after being introduced into a downstream member (e.g., a silencer or a muffler) through an exhaust pipe.

A vehicle where an engine is disposed in a front part has an elongated exhaust pipe structure comprised of a plurality of serially-connected exhaust pipes in order to introduce the exhaust gas from the front-mounted engine to the rear-mounted downstream member (e.g., a silencer). In a general exhaust pipe structure, exhaust pipes are connected via flange parts which are provided at respective ends of each exhaust pipe. The flange parts of adjacent exhaust pipes are abutted and bolted for connection.

Meanwhile, for achieving a large cabin space, it is desired to reduce a cross-sectional area of a tunnel part which is a space for routing the exhaust pipes from an exhaust port of the engine provided in an engine room at the front side of the vehicle to the silencer provided at the rear side of the vehicle. However, in the above structure in which the exhaust pipes are connected by bolting the flange parts formed at the respective ends of the pipes, it is difficult to downsize the flange parts, because the flange parts are required to have a plurality of bolting points in a circumferential direction of the exhaust pipes. Therefore, such a structure is disadvantageous for reducing the cross-sectional area of the tunnel part.

An exhaust pipe structure without bolting flange parts is disclosed in JP2019-035345A. According to this structure, the flange parts of adjacent exhaust pipes are abutted and then fastened by wrapping a clamp member around the outer peripheries of the flange parts.

However, according to the exhaust pipe structure described above, the flange part to be wrapped by the clamp member is formed by radially expanding the end of the exhaust pipe by press-forming. Thus, it is difficult to control the dimension of the flange parts and to ensure the gas-sealing performance of the abutted part of the flange parts.

### SUMMARY OF THE DISCLOSURE

The present disclosure is made in view of the above situations, and one purpose thereof is to provide a radially-downsized exhaust pipe structure with an improved gas-sealing performance.

According to one aspect of the present disclosure, an exhaust pipe structure for a vehicle with an internal combustion engine is provided with a first exhaust pipe and a second exhaust pipe disposed serially. The exhaust pipe structure includes a coupling part coupling the first exhaust pipe to the second exhaust pipe. The coupling part includes an insertion pipe part formed in the second exhaust pipe, an outer circumferential pipe part formed in the first exhaust pipe, the insertion pipe part being inserted into the outer circumferential pipe part, an inner circumferential pipe inserted into the outer circumferential pipe part, a first end part of the inner circumferential pipe being fixed to an inner circumferential surface of the first exhaust pipe and a second end part being inserted into the insertion pipe part, an annular protrusion formed in the second exhaust pipe or at a location of the second exhaust pipe adjacent to the insertion pipe part and protruding radially outward of the insertion pipe part from the entire circumference of the insertion pipe part, and a clamp member coupling the outer circumferential pipe part to the annular protrusion. An end part of the outer circumferential pipe part closer to the second exhaust pipe is a flare part having a shape spreading radially outward so as to conform to a shape of a surface of the annular protrusion closer to the outer circumferential pipe part. The clamp member has a band part wrapped radially outside around a part where the flare part overlaps with the annular protrusion, and a tightening part tightening the band part.

According to this structure, as a coupling part which serially couples the first exhaust pipe and the second exhaust pipe, the coupling part is adopted, which includes the inner circumferential pipe inserted into the insertion pipe part of the second exhaust pipe so as to seal the second exhaust pipe from inside and outside, and the clamp member which tightens from outside the annular protrusion of the second exhaust pipe together with the flare part of the outer circumferential pipe part of the first exhaust pipe.

According to this structure, the insertion pipe part of the second exhaust pipe is inserted into the outer circumferential pipe part of the first exhaust pipe, and the inner circumferential pipe is inserted into the second exhaust pipe. Therefore, the insertion pipe part of the second exhaust pipe is connected to the outer circumferential pipe part of the first exhaust pipe and the inner circumferential pipe both inside and outside. Accordingly, a joining part formed by the outer circumferential pipe part of the first exhaust pipe and the insertion pipe part of the second exhaust pipe is sealed from inside by the inner circumferential pipe, and, as a result, it is possible to improve the gas-sealing performance.

Moreover, in the annular protrusion of the second exhaust pipe, the band part of the clamp member is wrapped radially outside around the part where the flare part of the outer circumferential pipe part overlaps with the annular protrusion. Further, by the tightening part tightening the band part, the first exhaust pipe is fixed to the second exhaust pipe while this overlapping part is sealed. Thus, it is possible to reduce the outer diameter of the coupling part, compared with the conventional configuration in which flange parts of end parts of exhaust pipes are abutted to connect the exhaust pipes to each other. As a result, this exhaust pipe structure is compact in the radial direction, and improves the gas-sealing performance.

The coupling part may further include a sealing member inserted between the flare part and the annular protrusion.

According to this structure, while the sealing member is inserted between the flare part of the outer circumferential pipe part and the annular protrusion, the band part of the clamp member is wrapped radially outside around the part where the flare part of the outer circumferential pipe part overlaps with the annular protrusion, and the band is tightened by the tightening part. Therefore, it is possible to further improve the gas-sealing performance of the part where the flare part of the outer circumferential pipe part overlaps with the annular protrusion.

In addition, according to this structure, since the sealing member is inserted between the flare part of the outer circumferential pipe part and the annular protrusion in a surface-contact state, it is possible to further improve the gas-sealing performance, as compared with the case where it is inserted in a point-contact state.

The annular protrusion may be a part of the second exhaust pipe bulged radially outward. The inner circumferential pipe may extend to a location of the second exhaust pipe where the inner circumferential pipe overlaps with at least a part of the annular protrusion in a longitudinal direction of the second exhaust pipe.

According to this structure, since the inner circumferential pipe extends to the location where it overlaps with at least the part of the annular protrusion, the inner circumferential pipe can regulate that exhaust gas flows into a space inside the annular protrusion. Therefore, it is possible to reduce heating the sealing member through the annular protrusion with the exhaust gas. As a result, it is possible to reduce a degradation of the sealing member.

The inner circumferential pipe may extend to a location of the second exhaust pipe where the inner circumferential pipe overlaps with the entire annular protrusion in the longitudinal direction of the second exhaust pipe.

According to this structure, since the inner circumferential pipe extends to the location where it overlaps with the entire annular protrusion, the inner circumferential pipe can thoroughly regulate the exhaust gas flowing inside the annular protrusion. Therefore, it is possible to effectively reduce heating of the sealing member through the annular protrusion with the exhaust gas. As a result, it is possible to effectively reduce the degradation of the sealing member.

The inner circumferential pipe may hold the second exhaust pipe while being in contact with the second exhaust pipe at locations on both sides of the annular protrusion in the longitudinal direction of the second exhaust pipe.

According to this structure, it is possible to stably hold the second exhaust pipe by the inner circumferential pipe at the two contact points which are separated from each other in the longitudinal direction of the second exhaust pipe.

Particularly, a vehicle includes the above exhaust pipe structure.

Further particularly, the first exhaust pipe and the second exhaust pipe are configured to extend in a front-rear direction of the vehicle.

Further particularly, the first exhaust pipe is disposed in front of the second exhaust pipe.

According to another aspect of the present disclosure, a method of manufacturing a vehicle with an internal combustion engine provided with an exhaust pipe structure, is provided. The method includes inserting an inner circumferential pipe into an outer circumferential pipe part of a first exhaust pipe to fix a first end part of the inner circumferential pipe to the inner circumferential surface of the first exhaust pipe (this process may be referred to as a "fixing process"). The method includes inserting an insertion pipe part of a second exhaust pipe into the outer circumferential pipe part of the first exhaust pipe and inserting a second end part of the inner circumferential pipe into the second exhaust pipe to connect the second exhaust pipe to the first exhaust pipe in a state where the insertion pipe part is fitted into the outer circumferential pipe part and the inner circumferential pipe on both outside and inside (this process may be referred to as a "connecting process"). The method includes wrapping a band part of a clamp member from radially outside around the part where a flare part of the outer circumferential pipe part overlaps with an annular protrusion, and tightening the band part by a tightening part to fasten the first exhaust pipe to the second exhaust pipe (this process may be referred to as a "fastening process").

According to this manufacturing method, in the fixing process, the inner circumferential pipe is inserted into the outer circumferential pipe part to fix a first end part of the inner circumferential pipe to the inner circumferential surface of the first exhaust pipe, and then, in the connecting process, the insertion pipe part of the second exhaust pipe is inserted into the outer circumferential pipe part of the first exhaust pipe and a second end part of the inner circumferential pipe is inserted into the second exhaust pipe to connect the second exhaust pipe to the first exhaust pipe. Thus, since the second exhaust pipe is held by the outer circumferential pipe part of the first exhaust pipe and the inner circumferential pipe from both outside and inside, the second exhaust pipe is stably held (temporarily held) even before being fastened by the clamp member.

Then, after the connecting process, since the tightening part tightens the band part of the clamp member wrapped around the part where the flare part of the outer circumferential pipe part overlaps with the annular protrusion while the second exhaust pipe is stably held by the outer circumferential pipe part and the inner circumferential pipe, it is possible to easily perform the fastening process in which the first exhaust pipe and the second exhaust pipe are fastened.

In addition, during the connecting process, by the inner circumferential pipe plugging up from inside the joining part between the outer circumferential pipe part of the first exhaust pipe and the insertion pipe part of the second exhaust pipe, it is possible to improve the gas-sealing performance, and further by the fastening process, the gas-sealing performance of the part where the flare part of the outer circumferential pipe part overlaps with the annular protrusion improves.

As a result, according to this manufacturing method, it is possible to easily perform the fastening process and to improve the gas-sealing performance.

The inserting the insertion pipe part may include bringing the inner circumferential pipe into contact with the second exhaust pipe at locations on both sides of the annular protrusion in the longitudinal direction of the second exhaust pipe to hold the second exhaust pipe.

In this manufacturing method, during the connecting process, the inner circumferential pipe is possible to stably hold (temporarily hold) the second exhaust pipe at the two contact points separated from each other in the longitudinal direction of the second exhaust pipe, and therefore, the fastening process after the connecting process becomes easier.

When the first exhaust pipe is connected to a front end part of the second exhaust pipe, and a third exhaust pipe different from the first exhaust pipe is connected to a rear end part of the second exhaust pipe, the inserting the insertion pipe part may include connecting the front end part of the second exhaust pipe to the first exhaust pipe and connecting the rear end part of the second exhaust pipe to the third exhaust pipe. The wrapping the band part may include fastening the front end part of the second exhaust pipe to the first exhaust pipe by using the clamp member, while both the front and rear end parts of the second exhaust pipe are connected to the first exhaust pipe and the third exhaust pipe, respectively.

In this manufacturing method, even when the exhaust pipe structure is configured so that the first exhaust pipe and the third exhaust pipe are connected to both the front and rear end parts of the second exhaust pipe, respectively, during the connecting process, by connecting both the front and rear end parts of the second exhaust pipe to the first exhaust pipe and the third exhaust pipe, respectively, it is possible to hold (temporarily hold) more stably both the front and rear end parts of the second exhaust pipe before the fastening process. Then, during the subsequent fastening process, it is possible to easily fasten the front end part of the second exhaust pipe to the first exhaust pipe by using the clamp member, in the stably held state where both the front and rear end parts of the second exhaust pipe are connected to the first exhaust pipe and the third exhaust pipe, respectively.

### BRIEF DESCRIPTION OF DRAWINGS

Fig. 1 is a plan view illustrating the entire configuration of an exhaust pipe structure of a vehicle with an internal combustion engine according to one embodiment of the present disclosure.
Fig. 2 is an enlarged plan view of an engine-side coupling part of Fig. 1 and its peripheral part in a disassembled state.
Fig. 3 is an enlarged perspective view of the engine-side coupling part of Fig. 1.
Fig. 4 is a cross-sectional view illustrating the engine-side coupling part of Fig. 3.
Fig. 5 is a perspective view of a clamp member of Fig. 3.
Fig. 6 is a flowchart illustrating a procedure of a method of manufacturing the vehicle with the internal combustion engine provided with the exhaust pipe structure according to this embodiment.
Fig. 7 is a cross-sectional view illustrating a state before connecting an intermediate exhaust pipe to an engine-side exhaust pipe, in a front side connecting process of Fig. 6.
Fig. 8 is a cross-sectional view illustrating a state after the intermediate exhaust pipe is connected to the engine-side exhaust pipe, in the front side connecting process of Fig. 6.
Fig. 9 is an exploded perspective view illustrating a silencer-side coupling part of Fig. 1.
Fig. 10 is a view of an intermediate-side flange of Fig. 9, seen from the rear.
Fig. 11 illustrates a modification of the present disclosure, and is a cross-sectional view illustrating a state where an inner circumferential pipe partially overlaps with an annular protrusion in a longitudinal direction of the intermediate exhaust pipe.

### DETAILED DESCRIPTION OF THE DISCLOSURE

Hereinafter, one desirable embodiment of the present disclosure is described in detail with reference to the accompanying drawings. All of the features as shown in the drawings may not necessarily be essential.

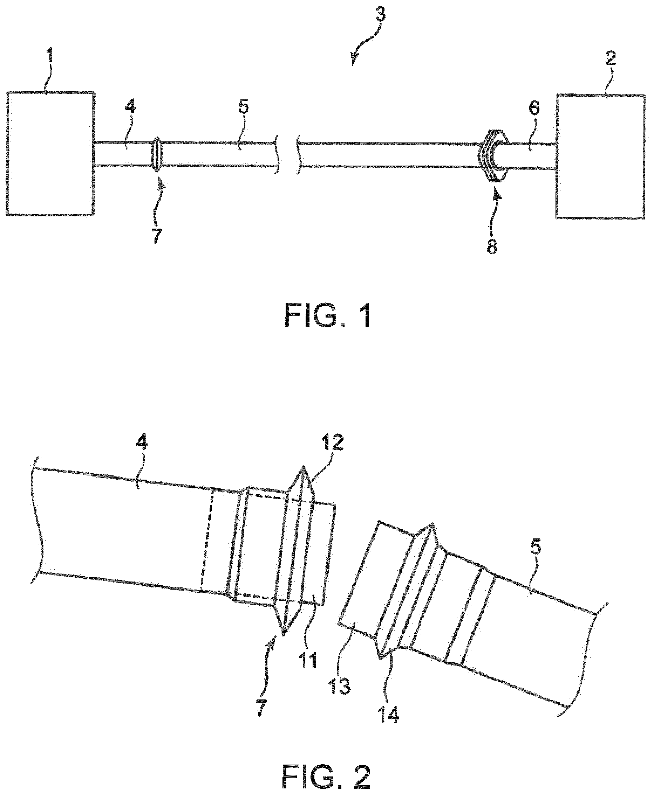

As illustrated in Figs. 1 to 4, an exhaust pipe structure 3 of a vehicle (e.g., an automobile) with an internal combustion engine according to this embodiment is applied to an elongated exhaust pipe structure extending under a floor of the vehicle body. In detail, the exhaust pipe structure 3 is to send exhaust gas from an engine 1 disposed in a front part of the vehicle to a silencer (muffler) 2 as a downstream member disposed at a rear part of the vehicle. The exhaust pipe structure 3 is comprised of a plurality of, particularly three exhaust pipes serially disposed in a direction of exhaust gas flow under the vehicle floor (a direction from the engine 1 to the silencer 2), which are an engine-side exhaust pipe 4 (a first exhaust pipe), an intermediate exhaust pipe 5 (a second exhaust pipe), and a silencer-side exhaust pipe 6 (a third exhaust pipe). The engine-side exhaust pipe 4 and the intermediate exhaust pipe 5 are coupled through an engine-side coupling part 7. Moreover, the intermediate exhaust pipe 5 and the silencer-side exhaust pipe 6 are connected through a silencer-side coupling part 8. At least one of the engine-side exhaust pipe 4, the intermediate exhaust pipe 5, and the silencer-side exhaust pipe 6 are configured to extend in a front-rear direction, i.e., a longitudinal direction, of the vehicle.

The engine-side exhaust pipe 4, the intermediate exhaust pipe 5, and the silencer-side exhaust pipe 6 are made of metallic materials, such as stainless steel, which are high in heat resistance and corrosion resistance.

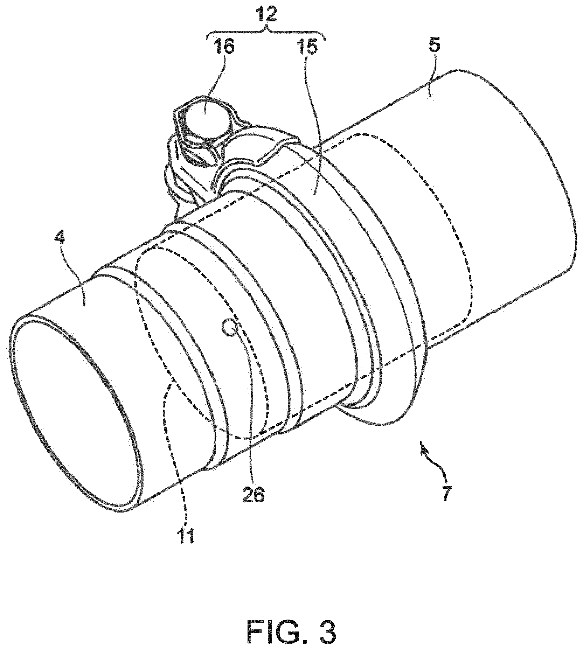

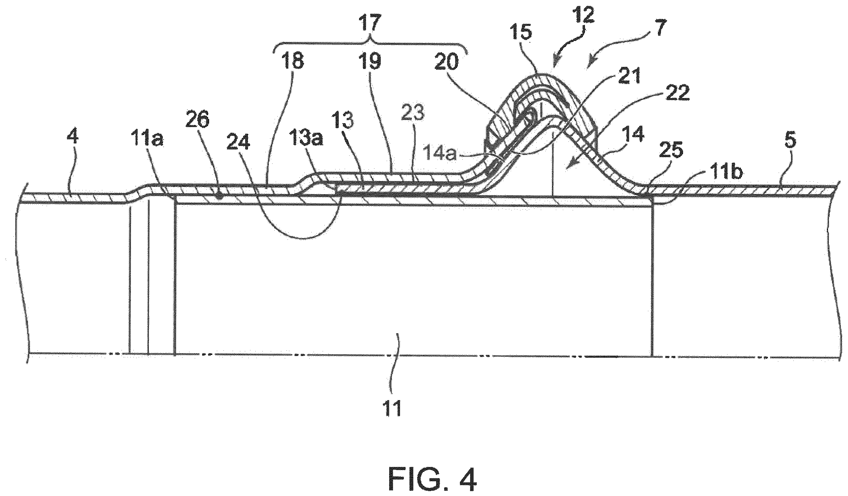

As illustrated in Figs. 3 and 4, the engine-side coupling part 7 has a structure which can couple the engine-side exhaust pipe 4 to the intermediate exhaust pipe 5. In detail, the engine-side coupling part 7 includes an insertion pipe part 13 formed in the intermediate exhaust pipe 5, an outer circumferential pipe part 17 which is formed in the engine-side exhaust pipe 4 and into which the insertion pipe part 13 is inserted, an annular protrusion 14, an inner circumferential pipe 11, and a clamp member 12.

The annular protrusion 14 is formed at a location of the intermediate exhaust pipe 5 adjacent to the insertion pipe part 13 so that it protrudes radially outward from the entire circumference of the insertion pipe part 13. Therefore, in the intermediate exhaust pipe 5, the insertion pipe part 13 and the annular protrusion 14 are lined up from an end part 13a (or a front part) closer to the engine-side exhaust pipe 4.

The outer circumferential pipe part 17 includes a plurality of, particularly three step parts (i.e., a first pipe part 18, a second pipe part 19, and a flare part 20) so that the diameter gradually increases as it approaches the intermediate exhaust pipe 5. The first pipe part 18, the second pipe part 19, and the flare part 20 are integrally formed so that they are lined up in the longitudinal direction of the engine-side exhaust pipe 4.

An inner diameter of the first pipe part 18 is the same as or slightly larger than an outer diameter of the inner circumferential pipe 11. An inner diameter of the second pipe part 19 is the same as or slightly larger than an outer diameter of the insertion pipe part 13 of the intermediate exhaust pipe 5.

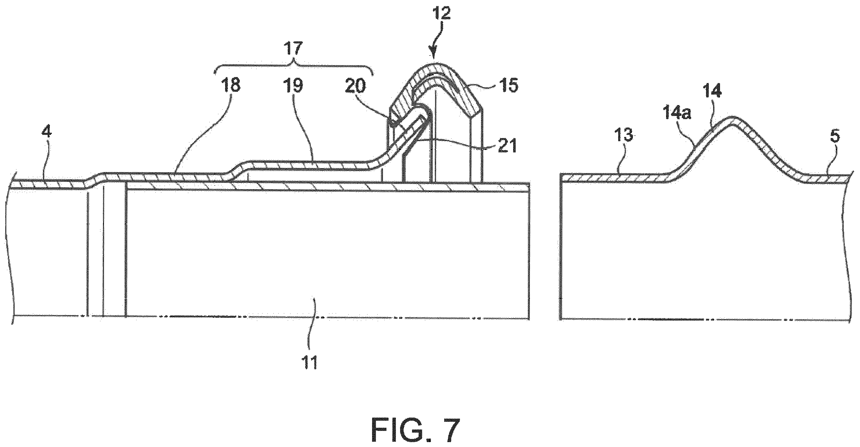

The flare part 20 constitutes an end part (or a rear part) of the outer circumferential pipe part 17 closer to the intermediate exhaust pipe 5. The flare part 20 has a shape which spreads radially outward and obliquely rearward (an upper right direction in Fig. 4) so that, when the engine-side exhaust pipe 4 and the intermediate exhaust pipe 5 are coupled to each other, the flare part 20 conforms to the shape of a surface 14a (or a front surface) of the annular protrusion 14 closer to the outer circumferential pipe part 17 (see Figs. 4 and 7). Thus, the annular protrusion 14 can be overlapped with the flare part 20 of the outer circumferential pipe part 17, while their surfaces oppose to each other.

The inner circumferential pipe 11 is a pipe made of a material with heat resistance and corrosion resistance, such as stainless steel, and has an outer diameter smaller than inner diameters of the insertion pipe part 13 and the outer circumferential pipe part 17 described above. The inner circumferential pipe 11 is inserted into the outer circumferential pipe part 17. A first end part 11a (a fixed-side end part) of the inner circumferential pipe 11 is fixed to an inner circumferential surface of the engine-side exhaust pipe 4. In detail, the end part 11a of the inner circumferential pipe 11 is fixed to the first pipe part 18 of the outer circumferential pipe part 17 by spot welding (see a weld point 26 in Figs. 3 and 4). A second end part 11b (a tip-side end part) of the inner circumferential pipe 11 is inserted into the insertion pipe part 13 of the intermediate exhaust pipe 5.

The inner circumferential pipe 11 extends in the longitudinal direction of the intermediate exhaust pipe 5 to a location where it overlaps with at least a part of the annular protrusion 14. For example, the inner circumferential pipe 11 illustrated in Fig. 4 extends in the longitudinal direction of the intermediate exhaust pipe 5 to a location where it overlaps with the entire annular protrusion 14.

The inner circumferential pipe 11 illustrated in Fig. 4 contacts the intermediate exhaust pipe 5 at two contact points 24 and 25 on both sides of the annular protrusion 14 in the longitudinal direction of the intermediate exhaust pipe 5 to hold the intermediate exhaust pipe 5.

As illustrated in Figs. 3 to 5, the clamp member 12 includes a band part 15 wrapped radially outside around the part where the flare part 20 of the outer circumferential pipe part 17 and the annular protrusion 14 are overlapped, and a tightening part 16 which tightens the band part 15.

The band part 15 is a C-shaped part made of a material with heat resistance and corrosion resistance, such as stainless steel, and it has a substantially V-shaped cross section so that it tightens the flare part 20 and the annular protrusion 14 while they are overlapped.

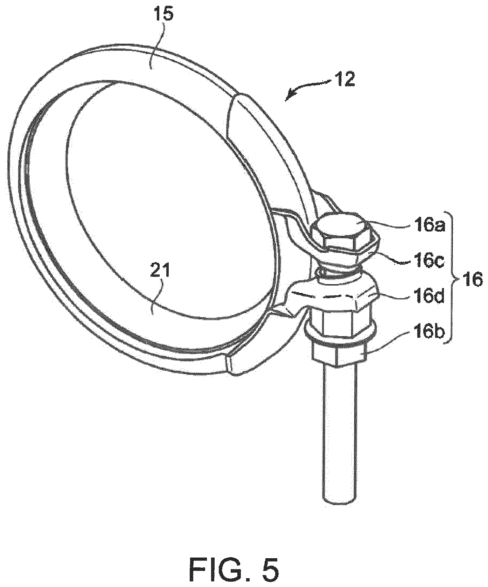

The tightening part 16 has a structure for tightening the band part 15, and, for example, as illustrated in Fig. 5, it includes a bolt 16a and a nut 16b, and a pair of tabs 16c and 16d provided to a pair of end parts of the C-shaped band part 15. A spacing between the pair of tabs 16c and 16d can be varied by adjusting the degree of tightening of the bolt 16a and the nut 16b.

The clamp member 12 of this embodiment is further provided with a sealing member 21 which is inserted between the flare part 20 of the outer circumferential pipe part 17 and the annular protrusion 14. The sealing member 21 is a thin annular member made of a material with heat resistance and corrosion resistance, such as stainless steel, and is fixed to an inner circumferential surface of the band part 15.

The present disclosure does not particularly limit the structure of the silencer-side coupling part 8 which couples the intermediate exhaust pipe 5 to the silencer-side exhaust pipe 6, and therefore, it may have a structure similar to the engine-side coupling part 7, or may have a coupling part structure which is commonly used. Since the silencer-side coupling part 8 does not particularly require a downsizing like the engine-side coupling part 7 disposed under the floor of the vehicle body, and has less dimensional restraints in the radial direction, it can adopt an arbitrary structure. Moreover, when a cleaner which purifies exhaust gas is provided to the intermediate exhaust pipe 5, the silencer-side exhaust pipe 6 just prevents a gas leak after purification and does not require the high sealing performance like the engine-side coupling part 7 which seals for exhaust gas before the purification.

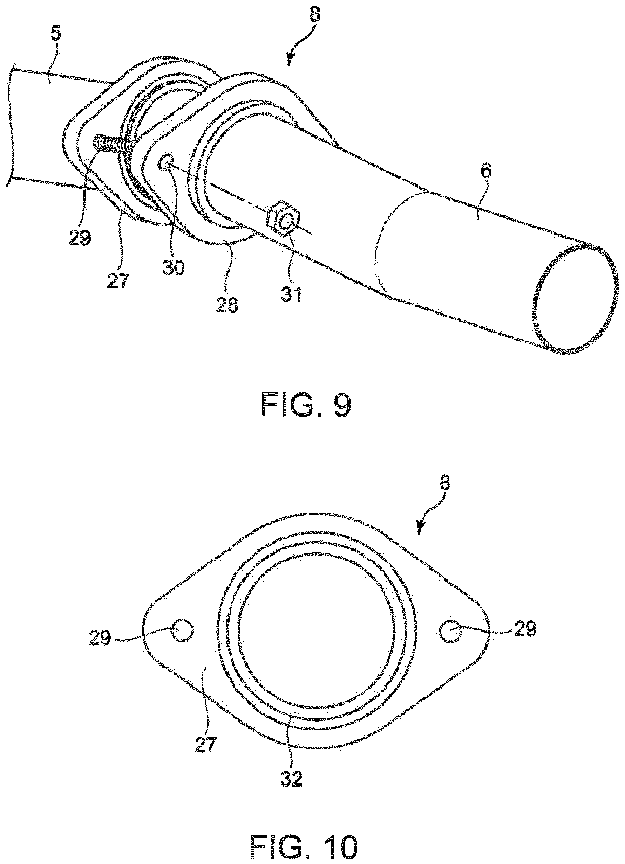

For example, as illustrated in Figs. 9 and 10, the silencer-side coupling part 8 has the structure of a common coupling part, which is comprised of a first flange part 27 provided to a rear end part of the intermediate exhaust pipe 5 (i.e., a downstream end part in the exhaust gas flow direction), a second flange part 28 provided to a front end part of the silencer-side exhaust pipe 6 (an upstream end part), a plurality of bolts 29 provided so as to project rearwardly from the first flange part 27, through-holes 30 which are formed in the second flange part 28 and into which the bolts 29 are inserted, nuts 31 which threadedly engage with the bolts 29 from the rear side of the second flange part 28, and a sealing member 32 inserted between the first flange part 27 and the second flange part 28. The intermediate exhaust pipe 5 and the silencer-side exhaust pipe 6 can be fastened by abutting the first and second flange parts 27 and 28 while inserting the bolts 29 into the through-holes 30, and then threadedly engaging the nuts 31 with tip ends of the bolts 29.

### (Method of Manufacturing Internal Combustion Engine Vehicle)

The internal combustion engine vehicle provided with the exhaust pipe structure 3 having the above structure is manufactured by the following procedures. All of the following procedures may not necessarily essential.

That is, the method of manufacturing the internal combustion engine vehicle includes at least one of: (a) an inner circumferential pipe fixing process for inserting the inner circumferential pipe 11 into the outer circumferential pipe part 17 of the engine-side exhaust pipe 4 to fix a first end part 11a of the inner circumferential pipe 11 to the inner circumferential surface of the engine-side exhaust pipe 4; (b) a connecting process for inserting the insertion pipe part 13 of the intermediate exhaust pipe 5 into the outer circumferential pipe part 17 of the engine-side exhaust pipe 4 and inserting the second end part 11b of the inner circumferential pipe 11 into the intermediate exhaust pipe 5 to connect the intermediate exhaust pipe 5 to the engine-side exhaust pipe 4 in a state where the insertion pipe part 13 is fitted into the outer circumferential pipe part 17 and the inner circumferential pipe 11 on both outside and inside; and (c) a fastening process for fastening the engine-side exhaust pipe 4 to the intermediate exhaust pipe 5 by the tightening part 16 tightening the band part 15 in a state where the band part 15 of the clamp member 12 is wrapped radially outside around the part where the flare part 20 of the outer circumferential pipe part 17 overlaps with the annular protrusion 14.

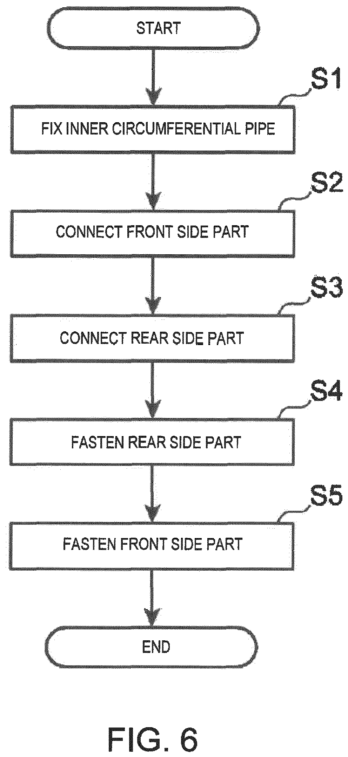

For example, as illustrated by a flowchart in Fig. 6, the manufacturing method particularly progresses in the order of a fixing process S1 of the inner circumferential pipe 11, a connecting process S2 of the front side part of the intermediate exhaust pipe 5, a connecting process S3 of the rear side part, a fastening process S4 of the rear side part, and a fastening process S5 of the front side part.

First, as a preparatory step, during the fixing process S1, the inner circumferential pipe 11 is inserted into the outer circumferential pipe part 17 and the first end part 11a of the inner circumferential pipe 11 is fixed to the inner circumferential surface of the engine-side exhaust pipe 4 (in this embodiment, the first pipe part 18 of the outer circumferential pipe part 17) by spot welding (see the weld point 26 in Figs. 3 and 4).

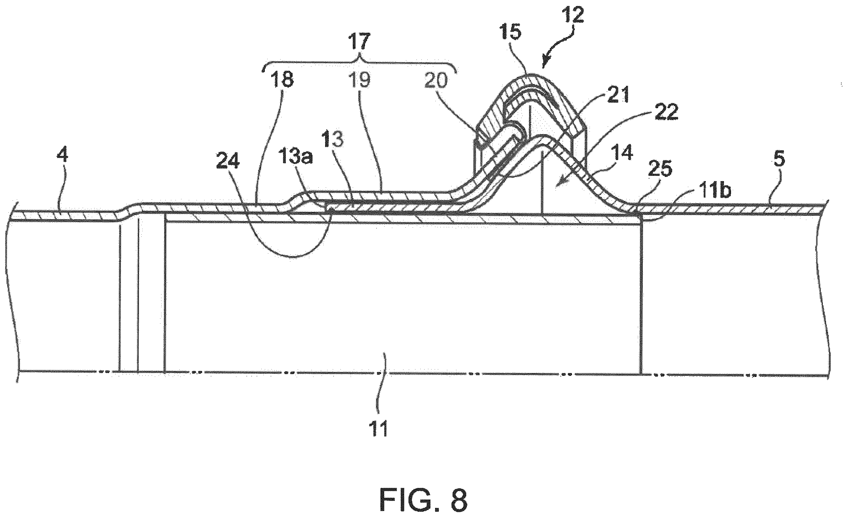

At the subsequent connecting process S2 of the front side part of the intermediate exhaust pipe 5, as illustrated in Figs. 7 and 8, the band part 15 of the clamp member 12 is first loosened (i.e., a state of releasing the tightening of the tightening part 16). At this time, the sealing member 21 engages with the flare part 20, and the band part 15 is slightly separated from the flare part 20. In this state, the insertion pipe part 13 of the intermediate exhaust pipe 5 is inserted into the outer circumferential pipe part 17 of the engine-side exhaust pipe 4 and the inner circumferential pipe 11 is inserted into the intermediate exhaust pipe 5 to connect the intermediate exhaust pipe 5 to the engine-side exhaust pipe 4. Therefore, the insertion pipe part 13 of the intermediate exhaust pipe 5 is stably held by the outer circumferential pipe part 17 and the inner circumferential pipe 11 from both outside and inside (i.e., temporarily holding the band part 15 without tightening it).

In this embodiment, during the connecting process S2 of the front side part, since the inner circumferential pipe 11 holds the intermediate exhaust pipe 5 by contacting at the two contact points 24 and 25 on both sides of the annular protrusion 14 in the longitudinal direction of the intermediate exhaust pipe 5, it is possible to hold the intermediate exhaust pipe 5 more stably.

Moreover, after the connecting process S2 of the front side part, the flare part 20 of the outer circumferential pipe part 17 overlaps with the annular protrusion 14 while the sealing member 21 intervenes therebetween.

Next, during the connecting process S3 of the rear side part, the first and second flange parts 27 and 28 are abutted against each other in the silencer-side coupling part 8 illustrated in Fig. 9, while inserting the bolts 29 in the through-holes 30. Thus, the bolts 29 on the first flange part 27 side engage with the through-holes 30 on the second flange part 28 side, and therefore, the rear side part of the intermediate exhaust pipe 5 is stably held (i.e., temporarily holding without threadedly engaging the nuts 31 with the bolts 29). Therefore, the intermediate exhaust pipe 5 is held on both front and rear sides (temporarily held) so that the operator is possible to focus on the fastening process without holding the intermediate exhaust pipe by a hand.

Then, during the fastening process S4 of the rear side part, the intermediate exhaust pipe 5 is fastened to the silencer-side exhaust pipe 6 by threadedly engaging the nuts 31 with the tip ends of the bolts 29 as illustrated in Fig. 9.

Then, during the fastening process S5 of the front side part, the band part 15 of the clamp member 12 is tightened by the tightening part 16, while the band part 15 is wrapped radially outside around the part where the flare part 20 of the outer circumferential pipe part 17 overlaps with the annular protrusion 14. Thus, the engine-side exhaust pipe 4 is fastened to the intermediate exhaust pipe 5, and the series of processes for the manufacturing method is finished.

### (Key Features (not necessarily essential) of This Embodiment)

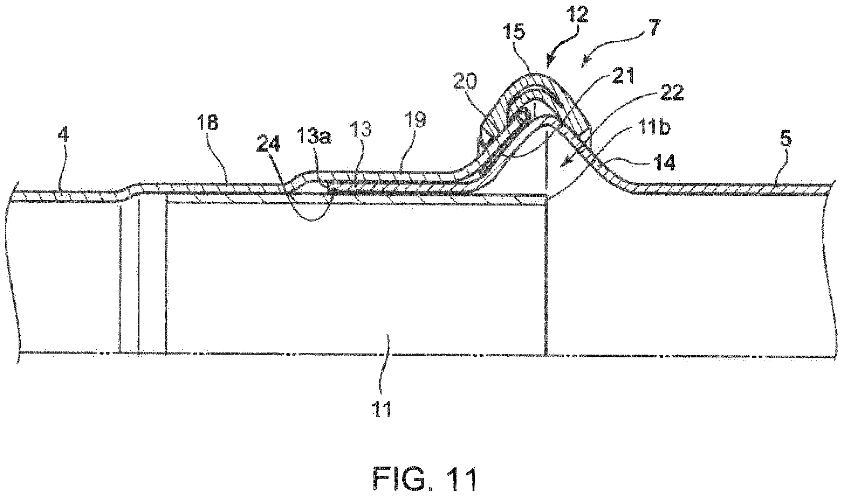

(1) As described above, the exhaust pipe structure 3 of the internal combustion engine vehicle of this embodiment adopts the engine-side coupling part 7 comprised of, as the engine-side coupling part 7 which serially couples the engine-side exhaust pipe 4 and the intermediate exhaust pipe 5, as illustrated in Fig. 4, the inner circumferential pipe 11 inserted into the insertion pipe part 13 of the intermediate exhaust pipe 5 so as to seal the intermediate exhaust pipe 5 from inside and outside, and the clamp member 12 which tightens from the outside the annular protrusion 14 of the intermediate exhaust pipe 5 together with the flare part 20 of the outer circumferential pipe part 17 of the engine-side exhaust pipe 4.
   Thus, with this structure, the insertion pipe part 13 of the intermediate exhaust pipe 5 is inserted into the outer circumferential pipe part 17 of the engine-side exhaust pipe 4, and the inner circumferential pipe 11 is inserted into the intermediate exhaust pipe 5. Therefore, the insertion pipe part 13 of the intermediate exhaust pipe 5 is connected to the outer circumferential pipe part 17 of the engine-side exhaust pipe 4 and the inner circumferential pipe 11 at both outside and inside. As illustrated in Fig. 4, a joining part 23 formed by the outer circumferential pipe part 17 of the engine-side exhaust pipe 4 and the insertion pipe part 13 of the intermediate exhaust pipe 5 is sealed from inside by the inner circumferential pipe 11, and, as a result, it is possible to improve the gas-sealing performance.
   Particularly, when exhaust gas flows through the exhaust pipe structure 3, since the joining part 23 is in a negative pressure state by the Venturi effect, it is advantageous that the exhaust gas is difficult to leak from the joining part 23.
   Moreover, in the annular protrusion 14 of the intermediate exhaust pipe 5, the band part 15 of the clamp member 12 is wrapped radially outside around the part where the flare part 20 of the outer circumferential pipe part 17 overlaps with the annular protrusion 14. Further, by the tightening part 16 tightening the band part 15, the engine-side exhaust pipe 4 is fixed to the intermediate exhaust pipe 5 while this overlapping part is sealed. Thus, it is possible to reduce the outer diameter of the engine-side coupling part 7, compared with the conventional configuration in which the flange parts of the end parts of the exhaust pipes are abutted to connect the exhaust pipes to each other. As a result, the exhaust pipe structure 3 is compact in the radial direction, and improves the gas-sealing performance.
(2) In the exhaust pipe structure 3 of the internal combustion engine vehicle of this embodiment, the engine-side coupling part 7 is further provided with the sealing member 21 inserted between the flare part 20 of the outer circumferential pipe part 17 and the annular protrusion 14.
   With this structure, while the sealing member 21 is inserted between the flare part 20 of the outer circumferential pipe part 17 and the annular protrusion 14, the band part 15 of the clamp member 12 is wrapped radially outside around the part where the flare part 20 of the outer circumferential pipe part 17 overlaps with the annular protrusion 14, and the band is tightened by the tightening part 16. Therefore, it is possible to further improve the gas-sealing performance of the part where the flare part 20 of the outer circumferential pipe part 17 overlaps with the annular protrusion 14.
(3) In addition, with this structure, since the sealing member 21 is inserted between the flare part 20 of the outer circumferential pipe part 17 and the annular protrusion 14 in a surface-contact state, it is possible to further improve the gas-sealing performance, as compared with the case where it is inserted in a point-contact state.
(4) In the exhaust pipe structure 3 of the internal combustion engine vehicle of this embodiment, the annular protrusion 14 is a part of the intermediate exhaust pipe 5 which is bulged radially outward. The inner circumferential pipe 11 extends to the location where it overlaps with at least a part of the annular protrusion 14 in the longitudinal direction of the intermediate exhaust pipe 5.
   With this structure, since the inner circumferential pipe 11 extends to the location where it overlaps with at least the part of the annular protrusion 14, it is possible to regulate by the inner circumferential pipe 11 that exhaust gas flows into a space 22 inside the annular protrusion 14. Therefore, it is possible to reduce that the exhaust gas heats the sealing member 21 through the annular protrusion 14. As a result, it is possible to reduce a degradation of the sealing member 21.
   Particularly, in the exhaust pipe structure 3 of the internal combustion engine vehicle of this embodiment, as illustrated in Fig. 4, the inner circumferential pipe 11 extends to the location where it overlaps with the entire annular protrusion 14 in the longitudinal direction of the intermediate exhaust pipe 5. Thus, the inner circumferential pipe 11 can regulate thoroughly that exhaust gas flows inside the annular protrusion 14. Therefore, it is possible to effectively reduce that the exhaust gas heats the sealing member 21 through the annular protrusion 14. As a result, it is possible to effectively reduce the degradation of the sealing member 21.
   Note that in terms of reducing the degradation of the sealing member 21, the inner circumferential pipe 11 may extend to the location where it overlaps with at least a part of the annular protrusion 14 in the longitudinal direction of the intermediate exhaust pipe 5. Therefore, as a modification of the present disclosure, as illustrated in Fig. 11, even when the second end part 11b of the intermediate exhaust pipe 5 overlaps with the annular protrusion 14 to cover up to a middle position of the annular protrusion 14 in the longitudinal direction of the intermediate exhaust pipe 5, it is still possible to regulate that the exhaust gas flows into the space 22 inside the annular protrusion 14, and therefore, the degradation of the sealing member 21 by heat can be reduced.
(5) In the exhaust pipe structure 3 of the internal combustion engine vehicle of this embodiment, the inner circumferential pipe 11 contacts the intermediate exhaust pipe 5 at the two contact points 24 and 25 on both sides of the annular protrusion 14 in the longitudinal direction of the intermediate exhaust pipe 5 to hold the intermediate exhaust pipe 5.
   With this structure, it is possible to stably hold the intermediate exhaust pipe 5 by the inner circumferential pipe 11 at the two contact points 24 and 25 which are separated from each other in the longitudinal direction of the intermediate exhaust pipe 5.
(6) The method of manufacturing the internal combustion engine vehicle of this embodiment is the method of manufacturing the internal combustion engine vehicle provided with the exhaust pipe structure 3 having the above structure. The method includes: the fixing process for inserting the inner circumferential pipe 11 into the outer circumferential pipe part 17 to fix a first end part 11a of the inner circumferential pipe 11 to the inner circumferential surface of the engine-side exhaust pipe 4; the connecting process for connecting the intermediate exhaust pipe 5 to the engine-side exhaust pipe 4 by inserting the insertion pipe part 13 of the intermediate exhaust pipe 5 into the outer circumferential pipe part 17 of the engine-side exhaust pipe 4 and inserting the second end part 11b of the inner circumferential pipe 11 into the intermediate exhaust pipe 5; and the fastening process for fastening the engine-side exhaust pipe 4 to the intermediate exhaust pipe 5 by the tightening part 16 tightening the band part 15 while the band part 15 of the clamp member 12 is wrapped radially outside around the part where the flare part 20 of the outer circumferential pipe part 17 overlaps with the annular protrusion 14.
   In this manufacturing method, during the fixing process, the inner circumferential pipe 11 is inserted into the outer circumferential pipe part 17 to fix a first end part 11a of the inner circumferential pipe 11 to the inner circumferential surface of the engine-side exhaust pipe 4, and then, during the connecting process, the insertion pipe part 13 of the intermediate exhaust pipe 5 is inserted into the outer circumferential pipe part 17 of the engine-side exhaust pipe 4 and the second end part 11b of the inner circumferential pipe 11 is inserted into the intermediate exhaust pipe 5 to connect the intermediate exhaust pipe 5 to the engine-side exhaust pipe 4. Thus, since the intermediate exhaust pipe 5 is held by the outer circumferential pipe part 17 of the engine-side exhaust pipe 4 and the inner circumferential pipe 11 from both outside and inside, the intermediate exhaust pipe 5 is stably held (temporally held) even before fastened by the clamp member 12.
   Then, after the connecting process, since the tightening part 16 tightens the band part 15 of the clamp member 12 wrapped around the part where the flare part 20 of the outer circumferential pipe part 17 overlaps with the annular protrusion 14 while the intermediate exhaust pipe 5 is stably held by the outer circumferential pipe part 17 and the inner circumferential pipe 11, it is possible to easily perform the fastening process.
   In addition, during the connecting process, by the inner circumferential pipe 11 plugging up from inside the joining part 23 between the outer circumferential pipe part 17 of the engine-side exhaust pipe 4 and the insertion pipe part 13 of the intermediate exhaust pipe 5, it is possible to improve the gas-sealing performance, and further by the fastening process, the gas-sealing performance of the part where the flare part 20 of the outer circumferential pipe part 17 overlaps with the annular protrusion 14 improves.
   As a result, in this manufacturing method, it is possible to easily perform the fastening process and to improve the gas-sealing performance.
(7) In the method of manufacturing the internal combustion engine vehicle of this embodiment, during the connecting process, the inner circumferential pipe 11 contacts the intermediate exhaust pipe 5 at the two contact points 24 and 25 on both sides of the annular protrusion 14 in the longitudinal direction of the intermediate exhaust pipe 5 to hold the intermediate exhaust pipe 5.
   In this manufacturing method, during the connecting process, the inner circumferential pipe 11 is possible to stably hold (temporarily hold) the intermediate exhaust pipe 5 at the two contact points 24 and 25 separated from each other in the longitudinal direction of the intermediate exhaust pipe 5, and therefore, the fastening process after the connecting process becomes easier.
(8) In the method of manufacturing the internal combustion engine vehicle of this embodiment, the engine-side exhaust pipe 4 as the first exhaust pipe is connected to the front end part of the intermediate exhaust pipe 5 as the second exhaust pipe, and when the silencer-side exhaust pipe 6 as the third exhaust pipe which is different from the engine-side exhaust pipe 4 (first exhaust pipe) is connected to the rear end part of the intermediate exhaust pipe 5, during the connecting process, the front end part of the intermediate exhaust pipe 5 is connected to the engine-side exhaust pipe 4, and the rear end part of the intermediate exhaust pipe 5 is connected to the silencer-side exhaust pipe 6. During the fastening process, while both the front and rear end parts of the intermediate exhaust pipe 5 are connected to the engine-side exhaust pipe 4 and the silencer-side exhaust pipe 6, the front end part of the intermediate exhaust pipe 5 is fastened to the engine-side exhaust pipe 4 by using the clamp member.

In this manufacturing method, even when the exhaust pipe structure 3 is configured so that the engine-side exhaust pipe 4 and the silencer-side exhaust pipe 6 are connected to both the front and rear end parts of the intermediate exhaust pipe 5, respectively, during the connecting process, by connecting both the front and rear end parts of the intermediate exhaust pipe 5 to the engine-side exhaust pipe 4 and the silencer-side exhaust pipe 6, respectively, it is possible to hold (temporarily hold) more stably both the front and rear end parts of the intermediate exhaust pipe 5 before the fastening process. Then, during the subsequent fastening process, it is possible to easily fasten the front end part of the intermediate exhaust pipe 5 to the engine-side exhaust pipe 4 by using the clamp member 12, in the stably held state where both the front and rear end parts of the intermediate exhaust pipe 5 are connected to the engine-side exhaust pipe 4 and the silencer-side exhaust pipe 6.

Note that both the front and rear end parts of the intermediate exhaust pipe 5 may be fastened to the engine-side exhaust pipe 4 and the silencer-side exhaust pipe 6 by using the clamp member 12. That is, in order to connect both the front and rear end parts of the intermediate exhaust pipe 5, the silencer-side coupling part 8 rearward of the intermediate exhaust pipe 5 may also have a similar structure to that of the engine-side coupling part 7 (i.e., the structure provided with the inner circumferential pipe 11 and the clamp member 12). In such a case, it is possible to fasten both the front and rear end parts of the intermediate exhaust pipe 5 to the engine-side exhaust pipe 4 and the silencer-side exhaust pipe 6 by using the clamp member 12.

### (Modification)

Although in the above embodiment the engine-side exhaust pipe 4 and the intermediate exhaust pipe 5 are adopted as the first exhaust pipe and the second exhaust pipe of the present disclosure which are serially disposed to each other, respectively, the present disclosure is not limited to this configuration.

For example, a configuration which is reversed from the above embodiment may be adopted, i.e., the first exhaust pipe may be the intermediate exhaust pipe 5 and the second exhaust pipe may be the engine-side exhaust pipe 4. In this modification, the outer circumferential pipe part 17 is formed in the intermediate exhaust pipe 5, the inner circumferential pipe 11 is fixed to the intermediate exhaust pipe 5, and the insertion pipe part 13 and the annular protrusion 14 are formed in the engine-side exhaust pipe 4. Also in this case, it has similar operation and effects to the above embodiment, i.e., it is compact in the radial direction and it is possible to improve the gas-sealing performance.

However, in this modification, in order to regulate (cut off) thoroughly the inflow of exhaust gas into the annular protrusion 14, it is desirable that the inner circumferential pipe 11 extends to a location where it overlaps with the entire annular protrusion 14 in the longitudinal direction of the engine-side exhaust pipe 4.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof, are therefore intended to be embraced by the claims.

### DESCRIPTION OF REFERENCE CHARACTERS

- 1: Engine
- 2: Silencer
- 3: Exhaust Pipe Structure
- 4: Engine-side Exhaust Pipe (First Exhaust Pipe)
- 5: Intermediate Exhaust Pipe (Second Exhaust Pipe)
- 6: Silencer-side Exhaust Pipe (Third Exhaust Pipe)
- 7: Engine-side Coupling Part (Coupling Part)
- 8: Silencer-side Coupling Part
- 11: Inner Circumferential Pipe
- 12: Clamp Member
- 13: Insertion Pipe Part
- 14: Annular Protrusion
- 15: Band Part
- 16: Tightening Part
- 17: Outer Circumferential Pipe Part
- 18: First Pipe Part
- 19: Second Pipe Part
- 20: Flare Part
- 21: Sealing Member
- 24, 25: Contact Point

## Claims

1. An exhaust pipe structure (3) for a vehicle with an internal combustion engine (1), the exhaust pipe structure (3) comprising:
a first exhaust pipe (4) and a second exhaust pipe (5) disposed serially; and
a coupling part (7) coupling the first exhaust pipe (4) to the second exhaust pipe (5), the coupling part (7) including:
an insertion pipe part (13) formed in the second exhaust pipe (5);
an outer circumferential pipe part (17) formed in the first exhaust pipe (4), the insertion pipe part (13) being inserted into the outer circumferential pipe part (17);
an inner circumferential pipe (11) inserted into the outer circumferential pipe part (17), a first end part (11a) of the inner circumferential pipe (11) being fixed to an inner circumferential surface of the first exhaust pipe (4) and a second end part (11b) being inserted into the insertion pipe part (13);
an annular protrusion (14) formed in the second exhaust pipe (5) and protruding radially outward of the insertion pipe part (13) from the entire circumference of the insertion pipe part (13); and
a clamp member (12) coupling the outer circumferential pipe part (17) to the annular protrusion (14),
wherein an end part of the outer circumferential pipe part (17) closer to the second exhaust pipe (5) is a flare part (20) having a shape spreading radially outward so as to conform to a shape of a surface of the annular protrusion (14) closer to the outer circumferential pipe part (17), and
wherein the clamp member (12) has a band part (15) wrapped radially outside around a part where the flare part (20) overlaps with the annular protrusion (14), and a tightening part (16) tightening the band part (15).

2. The exhaust pipe structure (3) of claim 1, wherein
the annular protrusion (14) is formed at a location of the second exhaust pipe (5) adjacent to the insertion pipe part (13).

3. The exhaust pipe structure (3) of claim 1 or 2, wherein the coupling part (7) further includes a sealing member (21) inserted between the flare part (20) and the annular protrusion (14).

4. The exhaust pipe structure (3) of any one of the preceding claims, wherein the annular protrusion (14) is a part of the second exhaust pipe (5) bulged radially outward.

5. The exhaust pipe structure (3) of any one of the preceding claims,
wherein the inner circumferential pipe (11) extends to a location of the second exhaust pipe (5) where the inner circumferential pipe (11) overlaps with at least a part of the annular protrusion (14) in a longitudinal direction of the second exhaust pipe (5).

6. The exhaust pipe structure (3) of claim 5, wherein the inner circumferential pipe (11) extends to a location of the second exhaust pipe (5) where the inner circumferential pipe (11) overlaps with the entire annular protrusion (14) in the longitudinal direction of the second exhaust pipe (5).

7. The exhaust pipe structure (3) of any one of the preceding claims, wherein the inner circumferential pipe (11) holds the second exhaust pipe (5) while being in contact with the second exhaust pipe (5) at locations on both sides of the annular protrusion (14) in the longitudinal direction of the second exhaust pipe (5).

8. A vehicle comprising the exhaust pipe structure (3) of any one of the preceding claims.

9. The vehicle of claim 8, wherein
the first exhaust pipe (4) and the second exhaust pipe (5) are configured to extend in a front-rear direction of the vehicle.

10. The vehicle of claim 9, wherein
the first exhaust pipe (4) is disposed in front of the second exhaust pipe (5).

11. A method of manufacturing a vehicle of any one of claims 8 to 10, comprising the steps of:
inserting an inner circumferential pipe (11) into an outer circumferential pipe part (17) of a first exhaust pipe (4) to fix a first end part (11a) of the inner circumferential pipe (11) to an inner circumferential surface of the first exhaust pipe (4);
inserting an insertion pipe part (13) of a second exhaust pipe (5) into the outer circumferential pipe part (17) of the first exhaust pipe (4) and inserting a second end part (11b) of the inner circumferential pipe (11) into the second exhaust pipe (5) to connect the second exhaust pipe (5) to the first exhaust pipe (4) in a state where the insertion pipe part (13) is fitted into the outer circumferential pipe part (17) and the inner circumferential pipe (11) on both outside and inside; and
wrapping a band part (15) of a clamp member (12) radially outside around a part where a flare part (20) of the outer circumferential pipe part (17) overlaps with an annular protrusion (14), and tightening the band part (15) by a tightening part (16) to fasten the first exhaust pipe (4) to the second exhaust pipe (5).

12. The method of claim 11, wherein the inserting the insertion pipe part (13) includes bringing the inner circumferential pipe (11) into contact with the second exhaust pipe (5) at locations on both sides of the annular protrusion (14) in the longitudinal direction of the second exhaust pipe (5) to hold the second exhaust pipe (5).

13. The method of claim 11 or 12,
wherein, the first exhaust pipe (4) is connected to a front end part of the second exhaust pipe (5), and a third exhaust pipe (6) different from the first exhaust pipe (4) is connected to a rear end part of the second exhaust pipe (5).

14. The method of claim 13,
the inserting the insertion pipe part (13) includes connecting the front end part of the second exhaust pipe (5) to the first exhaust pipe (4) and connecting the rear end part of the second exhaust pipe (5) to the third exhaust pipe (6).

15. The method of claim 13 or 14,
wherein the wrapping the band part (15) includes fastening the front end part of the second exhaust pipe (5) to the first exhaust pipe (4) by using the clamp member (12), while both the front and rear end parts of the second exhaust pipe (5) are connected to the first exhaust pipe (4) and the third exhaust pipe (6), respectively.
